# EUROPEAN PATENT SPECIFICATION

(11) **EP 2 049 751 B1**
(45) Date of publication and mention of the grant of the patent: **28.12.2011**
(21) Application number: 07805746.0
(22) Date of filing: 30.07.2007
(51) Int. Cl.: E04H 9/02

(54) **IMPROVED MULTI-DIRECTION ANTISEISMIC SUPPORTING SYSTEM**
VERBESSERTES ANTISEISMISCHES MULTIDIREKTIONALES TRÄGERSYSTEM
SYSTÈME DE SUPPORT PARASISMIQUE MULTIDIRECTIONNEL AMÉLIORÉ

(30) Priority: 04.08.2006 IT FI20060195
(43) Date of publication of application: 22.04.2009
(73) Proprietor: Rosss S.p.A., 50038 Scarperia (FI) (IT)
(72) Inventor: BETTINI, Stefano, 50037 San Piero A Sieve (FI) (IT)
(74) Representative: Mannucci, Michele
(86) International application number: PCT/IT2007/000542
(87) International publication number: WO 2008/015717

(56) References cited:
- EP-A- 0 583 868
- JP-A- 6 058 010
- JP-A- 9 071 303
- JP-A- 9 104 513
- JP-A- 9 118 406
- JP-A- 10 068 443
- JP-A- 10 117 871
- JP-A- 10 137 052
- JP-A- 10 139 117
- JP-A- 2000 351 417
- JP-A- 2003 160 212
- US-A- 2 342 302
- US-A- 4 402 483
- US-A- 4 517 778
- US-A- 5 261 200
- US-A1- 2005 241 245

## Description

### Technical field

The invention relates to a shelving structure with multi-direction antiseismic support to protect against both horizontal, i.e. undulatory, and vertical, i.e. sussultatory, seismic shocks.

### Background art

Said support has been produced to ensure efficient functioning against undulatory shocks that occur in any direction, and is intended for loads of the shelving type. The support in question is of the type comprising: two superposed structures, one connected with the ground and the other with the load resting thereon; and between said two structures an assembly of balls through which the weight of the load is distributed, each ball being susceptible to roll with respect to said structures, in any direction corresponding to those of the seism. Return means -mainly of elastic type - are provided to return the components of the support to the reciprocal preseismic position. A system of this type is described in the Italian patent application. no.2003A000167 filed on 13 June 2003.

A shelving structure with the features of the preamble of claim 1 is disclosed in Japanese patent JP 10139117A.

### Summary of the invention

The antiseismic supporting system in question has been designed to protect shelving from seismic shocks, through the interposition of balls susceptible to roll between opposed surfaces -in any horizontal direction. In substance, in the system in question:
- the shelving (or other structure) is provided with base frames rigidly connected to one another to ensure total stiffening thereof;
- pairs of feet are associated with each of the crossbeams of said frames, at the level of the uprights;
- each foot comprises a casing fastened to the ground, inside which there is housed a disk with rolling seats for the balls, which project therefrom inferiorly to roll on a surface integral with the ground and superiorly to roll below a surface of a movable element combined with the respective frame and resting on the balls;
- tension springs outside said casing are engaged with said frame and with a member integral with the ground, and act according to approximately horizontal directions and components of both longitudinal and transverse directions with respect to said structure; i.e. said tension springs apply forces having substantially horizontal components in both longitudinal and transverse direction with respect to the frame.

Other characteristics are defined in the appended claims at the end of the present description.

### Brief description of the drawings

The invention will be better understood by following the description and accompanying drawing, which shows a practical non-limiting example of the invention. In the drawing:

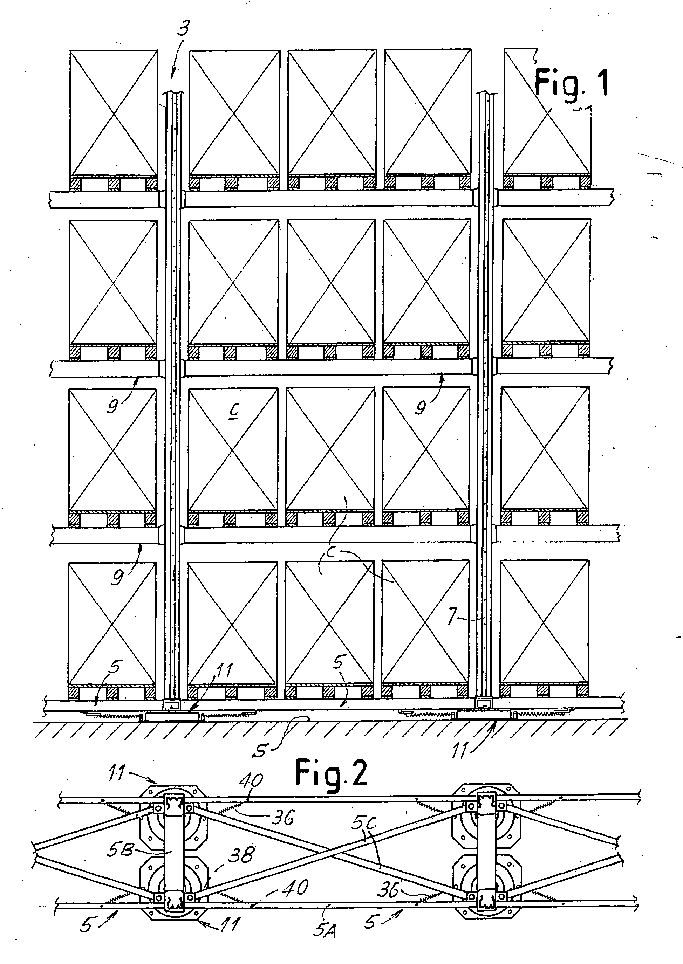

Figures 1 and 2 show a partial front view and a partial plan view of shelving provided with antiseismic feet according to the invention;

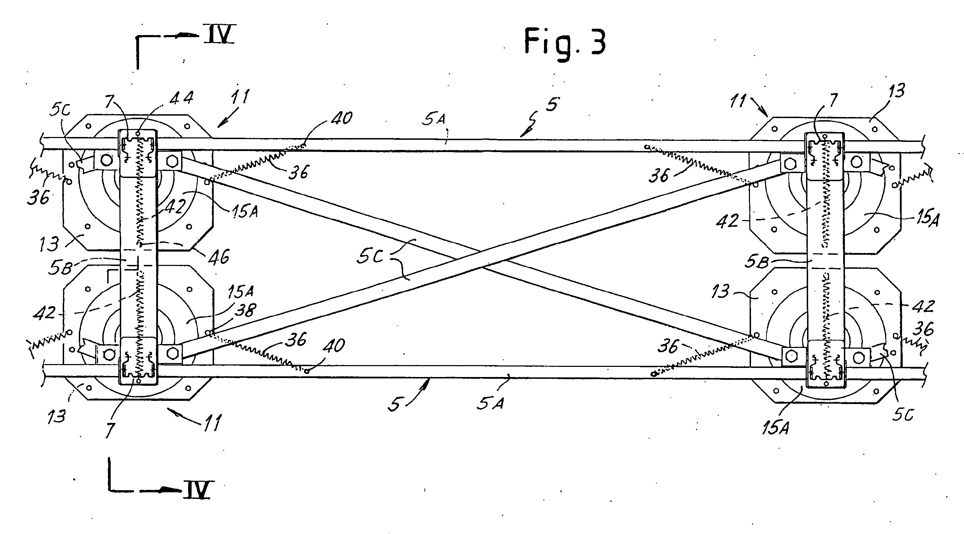

Figure 3 shows a partial enlargement of Figure 2;

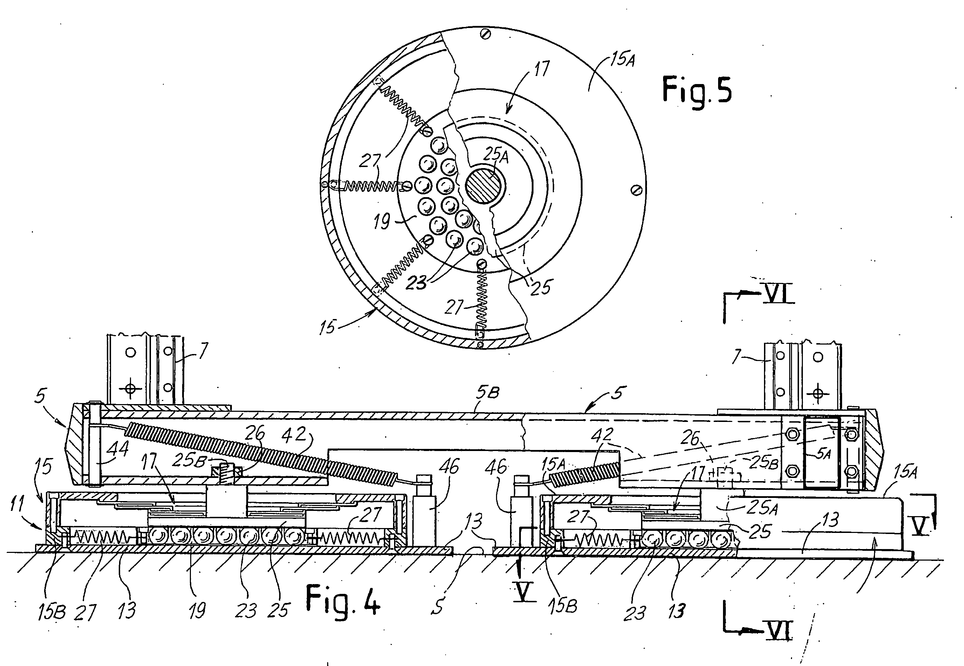

Figure 4 shows a cross section according to IV-IV in Figure 3, in a static position;
Figure 5 shows a sectional view according to the broken line V-V in Figure 3;
Figure 6 shows a section according to VI-VI in Figures 3 and 4 in static conditions; while
Figure 7 shows a section analogous to the one in Figure 6, but in the position reached during a seismic shock according to f_{SL}; and

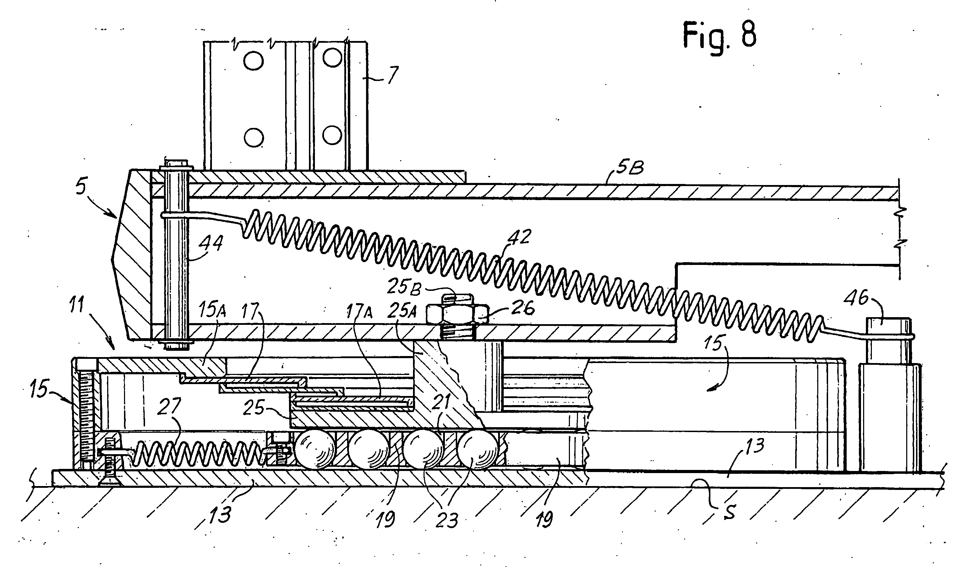

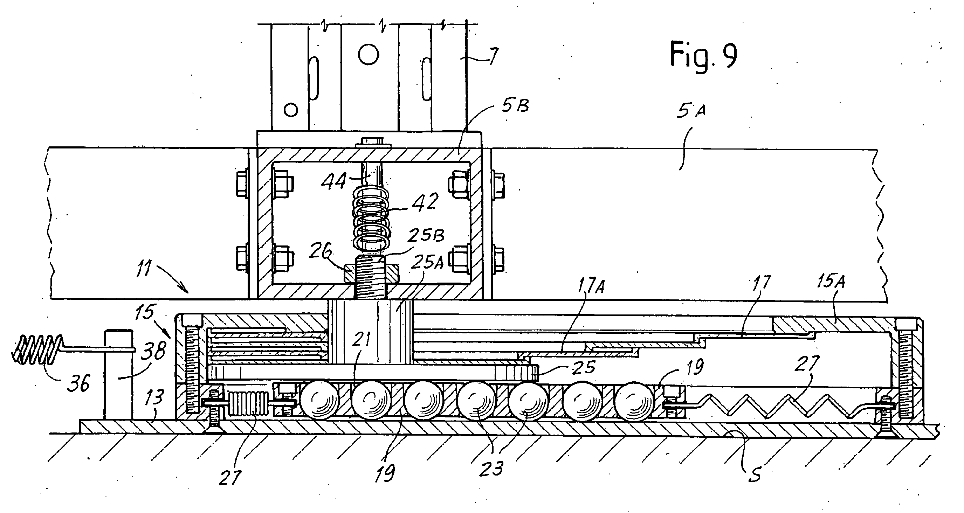

Figures 8 and 9 are partial enlargements of Figure 4, in the static and horizontal shock positions.

In the drawing the letter S indicates the ground, which is subject to horizontal seismic shocks in unpredictable directions (as well as possible vertical, i.e. sussultatory, seismic movements).

### Detailed description of an embodiment of the invention

The supporting system in question has been designed to support a load represented by a shelving 3, which comprises base frames 5, uprights 7 and shelves 9 for the loads C housed on the shelving. The base frames 5 comprise longitudinal base stringers 5A, crossbeams 5B at the level of the uprights 7 (to connect front and rear uprights) and stiffening braces 5C of the frames. All the frames are connected to one another to ensure stiffening of the structure to be protected, constituted by the shelving and by the loads C supported thereon, and which can even be stored in a non-uniform manner. The uprights 7 correspond with the crossbeams 5B.

The frames 5, rigid and rigidly connected to one another, ensure that the structure below the shelf or the like is completely rigid and non deformable, even if there are different weights on the various spans of shelving or the like, thereby preventing deformation of the superstructure subsequent to the different movements of the feet and thus remaining undamaged.

Engaged with the frames 5 and in particular with the crossbeams 5B are feet, generically indicated with 11 and designed to prevent transmission of telluric shocks from the ground S to the shelving 3, 5, 7, 9 and to protect it -with its loads C - from the consequences of these shocks. These feet 11, with the components connected thereto, are part of the present invention. According to the example shown, two feet 11 are combined with each crossbeam 5B.

Each of said feet 11 comprises a base plate 13 for resting on, and adequate fastening to, the ground S and an annular shell 15 with inner lip 15A, to form a casing for the inner members that perform the antiseismic functions of the foot; an inner continuous or discontinuous step 15B is provided for the purposes explained below. The casing 15, 15A is completed by a deformable cover comprising a series of laminar rings 17, 17A reciprocally constrained in a sliding fashion, the innermost 17A of which can thus be decentered with respect to the shell 15, 15A; this inner laminar ring 17A is supported by an internal organ, to be described.

Inside the casing formed by the elements 13, 15, 17, 17A there is housed a disk 19 in which there is produced a plurality of seats 21; each seat 21 is suitable to house a rolling metal ball 23, which projects both below and above the disk 19; the balls 23 can thus roll on the surface of the base plate 13 and can support a disk member 25 which can move horizontally by rolling on the balls 23. Peripherally fastened to the disk 19 there are several tension springs 27 which extend radially and are fastened to the step 15B of the shell 15; the springs 27 tend to maintain the disk 19 centered in the casing 13, 15, 15A. The disk member 25 is provided with a central projection 25A which projects from the hole of the laminar ring 17A, which rests on this disk member 25. With this arrangement, the assembly housed in the casing 13, 15, 15A remains protected therein. The projections 25A form the support that each foot 11 provides to support the shelving 3, 5, 7, 9. Two feet 11, and consequently two projections 25A, are used to support one of the crossbeams 5B; threaded pins 25B originating from the projections 25A penetrate corresponding holes provided in the beams 5B, and nuts 26 screwed onto the pins 25B constrain the frames 5 to the members 25. Therefore the shelving with its beams 5B rests on the projections 25A of the disk members 25, which in turn rest on the balls 23 housed in the disks 19; with the nuts the shelving is constrained against lifting by the feet 11. The disk members 25 are susceptible to slide -by means of the balls 23 -horizontally from a central position inside the casing 13, 15, 15A protected by the laminar rings 17, 17A, until coming into contact with the shell 15, according to any direction imparted to the ground S by a horizontal seismic shock; if necessary the disk members 25 can rest on the steps 15B, at the end of their horizontal stroke.

Between each of the feet 11 and the shelving structure return means operate, which tend to center the beams 5B on the respective pairs of feet. These return means are springs outside the casing of the balls. Said return means comprise for each foot 11 two springs 36 fastened in 38 to the base plate 13 and in 40 to the longitudinal base stringers 5A of the base frames 5; the fastenings 40 are advantageously adjustable by means of screws, which also facilitate installation of the springs. The two springs 36 are symmetrical inclined to exert traction effects with components parallel to the stringers 5A and with a component parallel to the crossbeams 5B. A further spring 42 extends approximately parallel as well as inside and below the crossbeam 5B, being fastened in 44 to the beam and in 46 to the base plate of the respective foot 11. The three springs 36, 36, 42 of the two feet 11 combined with a same crossbeam 5B tend to position the respective beam 5B on the two feet, and consequently the assembly of the springs 36 and 42 of a shelving tends to reposition the shelving with respect to the feet, after the springs have yielded following a horizontal seismic shock.

The springs 36 are easily accessible for inspection and replacement, also in relation to the loads located on the shelving.

The springs 27 tend to recenter the disk 19 inside the casing 13, 15, 15A.

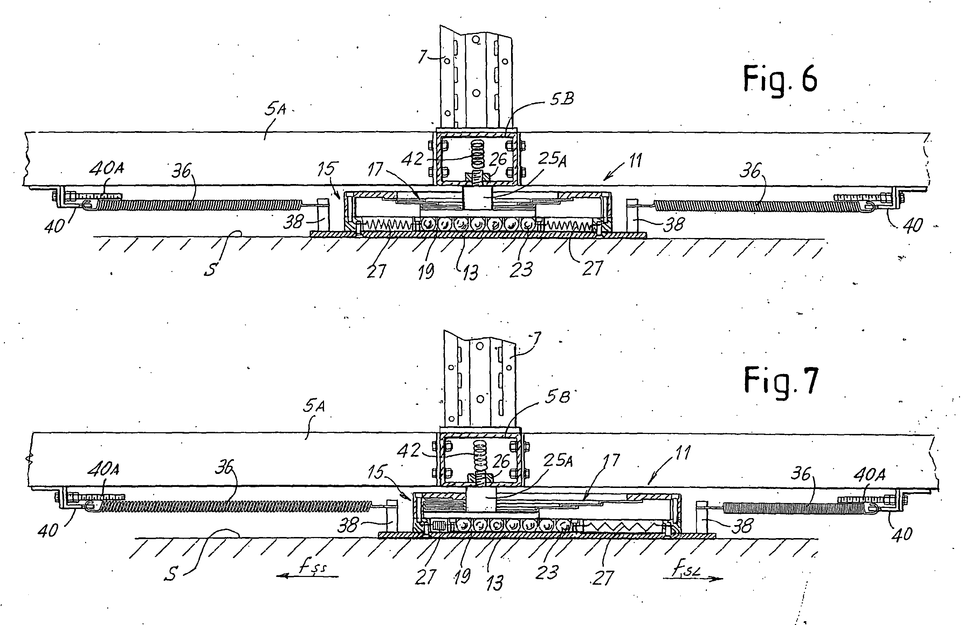

Comparison of Figures 6 and 7 clearly shows the regular position and the position instantaneously taken by a foot 11 which has moved due to a seismic shock or a component of seismic shock horizontal and parallel to the longitudinal stringers 5A, i.e. according to the direction of the arrow f_{sL}: during the seism the balls roll to prevent the movement according to f_{sL} from being transmitted to the mass of the shelving and to the load thereof, within the limits permitted by the dimensions of the disk member 25 with respect to the internal dimensions of the shell 15 (which will be established on the basis of measurements of the maximum degree of probable local seisms). The disk members 25 can move in the two directions. After the seism has ended, the springs 36 and 42 -which have been subjected to the total of their elongations during the seism - urge return to the correct initial conditions of the structure of the shelving with respect to the feet 11.

More specifically, by sliding according to f_{sL}, the disk member 25 can move until it strikes against the inside of the shell 15 and rests on the step 15B; the laminar rings 17, 17A are superposed on one another. The casing formed of the components 13, 15, 17, 25 remains in any case protected.

The feet will in any case be dimensioned so that even in the event of a seism of the highest level (in relation to the place in which the system is to be installed) they cannot reach their stroke end (the maximum movement will in any case be within elastic limits) and therefore cannot cause danger to the structures above. In any case, purely for further protection, a stroke limiter is provided.

Analogous phenomena take place as a result of seismic shocks or components of seismic shocks in direction of the beams 5B, i.e. orthogonal to the direction f_{sL}; in this case both components of the relevant springs 42 and components of the same orientation of the pairs of springs 36 take action.

The structure of the shelving can also be urged to overturn, being subject to horizontal forces transverse to the extension of the structure of the base frames 5. To prevent overturning, for each of the relevant feet 11, the following take action:
- resting of the disk members 25 on the steps 15B;
- the constraint represented by the laminar rings 17, 17A which remain interposed between the inner lip 15a and the disk member 25;
- and the constraint constituted by the nut 26 which engages the crossbeam 5B.

In this manner overturning of the shelving structure is prevented, with the action of all the relevant feet 11.

In all cases of undulatory shocks the presence of the balls 23 housed in the disks 19 and operating on the opposed surfaces of the plates 13 and of the disk members 25, prevents the transmission of seismic shocks (irrespective of the direction thereof) to the structure of the shelving and of the load thereof which rests entirely on the feet 11 through the balls 23.

In the case of sussultatory seismic shocks (combined or not with undulatory seismic shocks), the feet 11 again take action to prevent consequences on the structure supported by said feet. In fact, there remains in any case between the casing 13, 15, 15A, 17 and the beams 5B the vertical constraint ensured by interposition of the laminar rings 17, 17A between the inner lip 15A of the casing 13, 15, 17 and the disk member 25, and there also remains the constraint between the member 25, 25A, 25 and the beams 5B produced by the threaded pins 25B and by the nuts 26 screwed thereon to constrain the crossbeams 5B.

The longitudinal constraint represented by the base frames 5, undeformable and rigidly connected to one another, prevents any movement of the structure resting thereon, whatever the load more or less regularly stowed and prevents the structure above from becoming deformed or twisting at the joint between the elements.

The embodiment described of the feet 11 allows them to be installed easily on the structure of the shelving and easily fastened to the ground.

The positioning of the springs 36 and 42 outside the feet allows them to be dimensioned without limits to the overall dimensions and facilitates checking thereof.

It is understood that the drawing only shows an example provided by way of a practical arrangement of the invention, and that said invention can vary in forms and arrangement without however departing from the scope of the concept on which the inveniton is based. Any reference numerals in the appended claims are provided to facilitate reading of the claims with reference to the description and to the drawing, and do not limit the scope of protection represented by the claims.

## Claims

1. Shelving structure with multi-direction antiseismic supporting system for protecting from seismic shocks, in particular undulatory, i.e. horizontal, through interposition, between the ground and the structure, of balls susceptible to roll between opposed surfaces, one engaged with the ground (S) and the other with the structure, in any horizontal direction, whereby said shelving structure comprises
- rigid base frames (5, 5A, 5B, 5C), rigidly connected with one another and comprising longitudinal base stringers (5A) and crossbeams (5B), said crossbeams (5B) being correspondent with uprights of the shelving structure;
- pairs of feet (11) combined at least with said crossbeams (5B), each said foot comprising a casing (13, 15, 15A) inside which there is housed a disk (19) with rolling seats for the balls (23), which project therefrom on one side to roll on a surface (13) integral with the ground (S) and on the other side to roll with respect to a surface of a movable element (25, 25A) combined with the respective frame (5, 5A, 5B), **characterized in that** said shelving structure comprises tension springs (36, 42) provided outside each of said casings, said tension springs being engaged with said frame (5, 5A, 5B) and with a member (13) integral with the ground (S), and exerting forces having approximately horizontal components in both transverse and longitudinal directions with respect to said structure, and said rigid base frames (5, 5A, 5B, 5C) comprise stiffening braces (5C).

2. Shelving structure as claimed in claim 1, **characterized in that** said movable element (25, 25A) is urged by radial springs (27) to be positioned centrally to said casing (13; 15A, 15B).

3. Shelving structure as claimed in claim 1 or 2, **characterized in that** said casing (13, 15) has shapings (15A, 15B) suitable to constrain said structure against overturning.

4. Shelving structure as claimed in claim 3, **characterized in that** said movable element (25, 25A) has a disk-shaped part which at least at the end of a sliding inside said casing (13, 15, 15A) cooperates with an inner lip (15A) and with a step (15B) of said casing, to constrain said structure against overturning and lifting.

5. Shelving structure as claimed in claim 4, **characterized in that** said movable element (25, 25A) further cooperates with safety limit stops at least at the end of the sliding thereof inside said casing (13, 15, 15A).

6. Shelving structure as claimed in claim 4, **characterized in that** it comprises laminar rings (17, 17A) cooperating slidingly between said casing (13, 15, 15A) and said movable element (25, 25A) to complete said casing and to oppose overturning.

7. Shelving structure as claimed in one or more of the preceding claims, **characterized in that** said movable element (25, 25A) has a central projection (25A) which cooperates with said laminar rings (17, 17A) and is provided with a threaded pin (25B) which engages the beam 5B of the respective frame by means of a nut (26) or similar.

8. Shelving structure as claimed in one or more of the preceding claims, **characterized in that** each foot comprises outside said casing (15) a pair of symmetrical tension springs (36) limitedly inclined with respect to each other and extending approximately longitudinally with respect to the frames (5), to obtain high opposed longitudinal elastic components and a total of limited transverse components; said springs (36) being easy to inspect and replace.

9. Shelving structure as claimed in one or more of the preceding claims, **characterized in that** each foot comprises outside said casing a tension spring (42) extending transversely below the crossbeam (5B); the two springs (42) belonging to the two feet (11) associated with said crossbeam (5B) being suitable to act in the same transverse direction but in opposite directions.

10. Shelving structure as claimed in claim 8, **characterized in that** said crossbeams (5B) are developed hollow, and in particular tubular and with slots, and **in that** said springs (42) relevant to a same crossbeam (5B) are partially housed in said beam.

## Patentansprüche

1. Regalstruktur mit einem mehrdirektionalen antiseismischen Trägersystem zum Schutz gegen seismische Erschütterungen, insbesondere wellenförmigen, d. h. horizontal, durch Zwischenfügung von Kugeln zwischen dem Boden und der Struktur, die zwischen gegenüberliegenden Oberflächen in jeder horizontalen Richtung rollen können, von denen eine mit dem Boden (S) verbunden ist und die andere mit der Struktur, wobei die Regalstruktur aufweist
- starre Basisrahmen (5, 5a, 5b, 5c), die starr miteinander verbunden sind und längliche Basislängsträger (5A) und Querträger (5B) aufweisen, wobei die Querträger (5B) mit Ständern der Regalstruktur korrespondieren,
- Paaren von Füßen (11), die zumindest mit den Querträgern (5B) kombiniert sind, wobei jeder Fuß ein Gehäuse (13, 15, 15A) aufweist, innerhalb dessen eine Scheibe (19) mit Wälzflächen für die Kugeln (23) aufgenommen sind, die davon zu einer Seite vorstehen, um auf einer Fläche (13) zu rollen, die integral mit dem Boden (S) ist, und auf der anderen Seite mit Bezug auf eine Fläche eines bewegbaren Elementes (25, 25a) zu rollen, die mit den jeweiligen Rahmen (5, 5a, 5b) kombiniert ist, **dadurch gekennzeichnet, dass** die Regalstruktur Zugfedern (36, 42) aufweist, die außerhalb jedes der Gehäuse vorgesehen sind, wobei die Zugfedern in Eingriff mit dem Rahmen (5, 5a, 5b) stehen und mit einem Element (13), das integral mit dem Boden (S) ist, und Kräfte ausüben, die näherungsweise horizontale Komponente in sowohl Quer- als auch Längsrichtung mit Bezug auf die Struktur aufweisen und wobei die starren Basisrahmen (5, 5a, 5b, 5c) Versteifungsklammern (5C) aufweisen.

2. Regalstruktur nach Anspruch 1, **dadurch gekennzeichnet, dass** das bewegbare Element (25, 25a) durch Radialfedern (27) für eine zentrale Positionierung zu dem Gehäuse (13; 15a, 15b) gezwängt wird.

3. Regalstruktur nach Anspruch 1 oder 2 **dadurch gekennzeichnet, dass** das Gehäuse Formungen (15A, 15b) aufweist, die geeignet sind, die Struktur gegen Umkippen zu halten.

4. Regalstruktur nach Anspruch 3, **dadurch gekennzeichnet, dass** das bewegbare Element (25, 25A) einen scheibenförmigen Teil aufweist, der zumindest am Ende eines Gleitinneren des Gehäuses (13, 15, 15a) mit einer inneren Lippe (15A) zusammen wirkt, und mit einer Stufe (15B) des Gehäuses, um die Struktur gegen Umkippen und Anheben zu halten.

5. Regalstruktur nach Anspruch 4, **dadurch gekennzeichnet, dass** das bewegbare Element (25, 25A) ferner mit Sicherheitsgrenzanschlägen an zumindest dem Ende seines Gleitens innerhalb des Gehäuses (13, 15, 15a) zusammen wirkt.

6. Regalstruktur nach Anspruch 4, **dadurch gekennzeichnet, dass** es Laminarringe (17, 17A) aufweist, die gleitend zwischen dem Gehäuse (13, 15, 15a) und dem bewegbaren Element (25, 25a) zusammen wirken, um das Gehäuse zu vervollständigen und dem Umkippen entgegen zu wirken.

7. Regalstruktur nach einem oder mehreren der vorstehenden Ansprüche, **dadurch gekennzeichnet, dass** das bewegbare Element (25, 25a) einen Mittenvorsprung (25a) aufweist, der mit den Laminarringen (17, 17A) zusammen wirkt und mit einem Gewindestift (25B) versehen ist, der mit dem Träger (5b) des jeweiligen Rahmens mittels einer Mutter (26) oder dergleichen in Eingriff steht.

8. Regalstruktur nach einem oder mehreren der vorstehenden Ansprüche, **dadurch gekennzeichnet, dass** jeder Fuß außerhalb des Gehäuses (15) ein paar symmetrischer Zugfedern (36) aufweist, die mit Bezug auf einander begrenzt geneigt sind und sich etwa längst mit Bezug auf die Rahmen (5) strecken, um hohe gegenläufige längselastische Komponenten zu erzielen und eine Gesamtheit von begrenzten Querkomponenten, wobei die Federn (36) einfach zu inspizieren und zu ersetzen sind.

9. Regalstruktur nach einem oder mehreren der vorstehenden Ansprüche, **dadurch gekennzeichnet, dass** jeder Fuß außerhalb des Gehäuses eine Zugfeder (42) aufweist, die sich quer unterhalb des Querträgers (5b) erstreckt, wobei zwei Federn (42), die zu zwei Füßen (11) gehören, die dem Querträger (5b) zugeordnet sind, geeignet sind, in der selben Querrichtung aber in gegenüberliegende Richtungen zu wirken.

10. Regalstruktur nach Anspruch 8, **dadurch gekennzeichnet, dass** die Querträger (5b) hohl ausgebildet sind, und insbesondere rohrförmig mit Schlitzen und das die Federn (42), die für den selben Querträger (5b) relevant sind, teilweise in dem Träger aufgenommen sind.

## Revendications

1. Structure de rayonnage avec système de support antisismique multidirectionnel pour protéger des chocs sismiques, en particulier ondulatoires, c'est-à-dire horizontaux, grâce à l'interposition, entre le sol et la structure, de billes susceptibles de rouler entre des surfaces opposées, une en prise avec le sol (S) et l'autre avec la structure, dans une direction horizontale quelconque, dans laquelle ladite structure de rayonnage comprend
- des cadres de base rigides (5, 5A, 5B, 5C), reliés rigidement les uns avec les autres et comprenant des longerons de base longitudinaux (5A) et des traverses (5B), lesdites traverses (5B) étant en correspondance avec des montants de la structure de rayonnage;
- des paires de pieds (11) associés au moins auxdites traverses (5B), chaque dit pied comprenant un carter (13, 15, 15A) à l'intérieur duquel est logé un disque (19) avec des sièges de roulement pour les billes (23), qui font saillie à partir de celui-ci sur un côté pour rouler sur une surface (13) solidaire du sol (S) et sur l'autre côté pour rouler par rapport à une surface d'un élément mobile (25, 25A) associé au cadre respectif (5, 5A, 5B), **caractérisée en ce que** ladite structure de rayonnage comprend des ressorts de tension (36, 42) prévus à l'extérieur de chacun desdits carters, lesdits ressorts de tension étant en prise avec ledit cadre (5, 5A, 5B) et avec un organe (13) solidaire du sol (S), et exerçant des forces possédant des composantes approximativement horizontales dans les directions transversale et longitudinale par rapport à ladite structure, et lesdits cadres de base rigides (5, 5A, 5B, 5C) comprennent des tirants de raidissement (5C).

2. Structure de rayonnage selon la revendication 1, **caractérisée en ce que** ledit élément mobile (25, 25A) est sollicité par des ressorts radiaux (27) pour être positionné de façon centrale par rapport audit carter (13 ; 15A, 15B).

3. Structure de rayonnage selon la revendication 1 ou 2, **caractérisée en ce que** ledit carter (13, 15) comporte des formations (15A, 15B) adaptées pour empêcher ladite structure de se renverser.

4. Structure de rayonnage selon la revendication 3, **caractérisée en ce que** ledit élément mobile (25, 25A) comporte une partie en forme de disque qui, au moins à la fin d'un coulissement à l'intérieur dudit carter (13, 15, 15A), coopère avec une lèvre intérieure (15A) et avec un épaulement (15B) dudit carter, pour empêcher ladite structure de se renverser et de se soulever.

5. Structure de rayonnage selon la revendication 4, **caractérisée en ce que** ledit élément mobile (25, 25A) coopère en outre avec des butées de fin de course de sécurité, au moins à la fin de son coulissement l'intérieur dudit carter (13, 15, 15A).

6. Structure de rayonnage selon la revendication 4, **caractérisée en ce qu'**elle comprend des bagues laminaires (17, 17A) coopérant de façon coulissante entre ledit carter (13, 15, 15A) et ledit élément mobile (25, 25A) pour compléter ledit carter et pour s'opposer au renversement.

7. Structure de rayonnage selon une ou plusieurs des revendications précédentes, **caractérisée en ce que** ledit élément mobile (25, 25A) comporte une saillie centrale (25A) qui coopère avec lesdites bagues laminaires (17, 17A) et est pourvue d'une tige filetée (25B) qui entre en prise avec la traverse (5B) du cadre respectif au moyen d'un écrou (26) ou similaire.

8. Structure de rayonnage selon une ou plusieurs des revendications précédentes, **caractérisée en ce que** chaque pied comprend, à l'extérieur dudit carter (15), une paire de ressorts de tension symétriques (36) inclinés de façon limitée l'un par rapport à l'autre et s'étendant de façon approximativement longitudinale par rapport aux cadres (5), pour obtenir des composantes élastiques longitudinales opposées élevées et un total de composantes transversales limitées ; lesdits ressorts (36) étant faciles à inspecter et à remplacer.

9. Structure de rayonnage selon une ou plusieurs des revendications précédentes, **caractérisée en ce que** chaque pied comprend, à l'extérieur dudit carter, un ressort de tension (42) s'étendant transversalement en dessous de la traverse (5B) ; les deux ressorts (42) appartenant aux deux pieds (11) associés à ladite traverse (5B) étant adaptés pour agir dans la même direction transversale mais dans des sens opposés.

10. Structure de rayonnage selon la revendication 8, **caractérisée en ce que** lesdites traverses (5B) sont développées de façon creuse, et en particulier de façon tubulaire et avec des fentes, et **en ce que** lesdits ressorts (42) correspondant à une même traverse (5B) sont partiellement logés dans ladite traverse.
